# EUROPEAN PATENT APPLICATION

(11) **EP 4 800 960 A1**
(43) Date of publication of application: **02.09.2026**
(21) Application number: 25160912.9
(22) Date of filing: 28.02.2025
(51) Int. Cl.: H04L 5/00

(54) **A METHOD OF COMMUNICATING SENSING AND COMMUNICATION SIGNALS IN AN INTEGRATED SENSING AND COMMUNICATION SYSTEM, A BASE STATION, AND A COMPUTER PROGRAM**

(71) Applicant: Vodafone Group Services Limited, Newbury RG14 2FN (GB)
(72) Inventor: BOUKLEY HASAN, Wael, London, W2 6BY (GB)
(74) Representative: Boult Wade Tennant LLP

(57) **Abstract**

A method of communicating sensing and communication signals in an Integrated Sensing and Communication, ISAC, system is provided. An available frequency band is divided into a plurality of sub-frequency bands. The sensing and communication signals are communicated during a plurality of time frames. The plurality of time frames and the plurality of sub-frequency bands together provide a plurality of radio resource blocks, each radio resource block having a sub-frequency band and time frame. The method comprises allocating an extended uplink radio resource block in a first time frame and having a first sub-frequency band. The method further comprises allocating a sensing radio resource block in the first time frame and having a second sub-frequency band adjacent to the first sub-frequency band.

## Description

### Field of the invention

The present invention relates to methods of communicating sensing and communication signals in an Integrated Sensing and Communication (ISAC) system. In some specific examples, the invention relates to techniques for removing interference from extended uplink radio resource blocks in a sub-band non-overlapping Full Duplex (SBFD) scheme.

### Glossary

ISAC - Integrated Sensing and Communication
MIMO - Multiple-Input Multiple-Output
Al - Artificial Intelligence
SBFD - Sub-Band Full-Duplex
RAN - Radio Access Network
DL - Downlink
UL - Uplink
DPD - Digital Pre-Distortion
RX - Receiver
TX - Transmitter
BPSK - Binary Phase-Shift Keying
BWP - Bandwidth Part
CC - Component Carrier
MCS - Modulation and Coding Scheme
UE - User Equipment
BS - Base Station
ABS - Advanced Base Station
BTS - Base Transceiver Station
BSS - Basic Service Set
ESS - Extended Service Set
AP - Access Point
NB - Node B (Radio Base Station Receiver)
eNB - Evolved Node B
gNB - Next-Generation Node B
TRP - Transmission and Reception Point
PS - Processing Server
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA - Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

### Background

Advanced telecommunications networks may integrate both sensing and communications technologies. Such networks may transmit and receive both signals for sensing and signals for communication from the same base station. For sensing, the network may utilise radar-like signals for the purpose of detecting and tracking nearby objects, for example. For communications, the network may utilise a known communications system, such as a cellular communications system.

Transmission and receipt of signals in networks is typically multiplexed. For example, there may be a series of timeslots available for communication of signals. Each timeslot may then be used to communicate a different signal. For example, a first timeslot may be used to communicate a sensing signal. A second timeslot may be used to transmit a communications signal. A third timeslot may be used to transmit a different communications signal. A fourth timeslot may be used to receive a communications signal, and so on. Additionally or alternatively, multiplexing may be performed in the frequency domain. A general time and/or frequency slot may be referred to as a radio resource allocation.

ISAC technology may simultaneously serve traditional wireless communication services and act as a sensor node (e.g., by providing sensing functionality similar to radar) to provide environmental sensing functionality, such as intruder detection, drone monitoring, meteorological prediction, and the like. ISAC technology may facilitate communication via one or more of: beamforming with MIMO arrays; Al model creation and training; and modulation scheme adaptation. ISAC technology may enable the network to react quickly to the changing needs of its subscribers. The sensing and communication aspects of ISAC technology may each comprise common elements, such as beamforming and phased antenna arrays. ISAC technology may further comprise channel estimation, symbol detection and object detection functionality, wherein these functions are provided by common hardware.

To improve flexibility and radio resource usage efficiency, frequency bands may be further divided into sub-bands (component carriers).

In a traditional TDD scheme, time frames are designated as uplink or downlink time frames. To reduce latency, a radio resource block in a downlink time frame may be used for uplink. As a result, time-critical uplink communications may be communicated more promptly, rather than being delayed until the next available uplink time frame. To standardise this behaviour, sub-band full-duplex (SBFD) was introduced to 3GPP RAN in release 18 as a study item and a working item in release 19. SBFD enables the base station to perform transmit and receive operations in the same time frame, using non-overlapping frequency resources (sub-bands).

In existing methods for SBFD, uplink resource allocations may be subject to significant interference if the adjacent frequency sub-bands are allocated for downlink. This is at least partly due to the comparatively high transmitter power of the base station compared to the UE, and the proximity of the transmit antenna to the receive antenna (which could be the same antenna in some examples).

Existing SBFD systems may remove this interference from the received signal, based on knowledge of the downlink signals that are communicated via sub-frequency bands adjacent to the uplink band. However, removal of interference in this way is complex and can require significant power and computational resources to achieve. Therefore, an improved method is desired.

It is envisaged that ISAC and SBFD may be integrated at the same base station (for example, in 6G 3GPP Releases). However, there is currently no mechanism for how these systems may be inter-operated efficiently.

### Summary

Against this background, a method of operating an ISAC system, is provided. In some examples, radio resource blocks in downlink time frames are used for extended uplink. The proposed methods allocate a resource block for a sensing signal (which stays the same or is changed infrequently) adjacent to a resource block for extended uplink (the extended uplink radio resource block is allocated for receiving an uplink communications signal from a User Equipment, UE). The adjacent resource block for the sensing signal may be allocated in the same time frame and having a sub-frequency band that is directly above or directly below the extended uplink radio resource block. In this way, the interference at the extended uplink radio resource block due to the sensing signal may be determined and removed.

Accordingly, a method of communicating sensing and communication signals in an Integrated Sensing and Communication, ISAC, system is provided. An available frequency band is divided into a plurality of sub-frequency bands. The sensing and communication signals are communicated during a plurality of time frames. The plurality of time frames and the plurality of sub-frequency bands together provide a plurality of radio resource blocks, each radio resource block having a sub-frequency band and time frame. The method comprises allocating an extended uplink radio resource block in a first time frame and having a first sub-frequency band. The method further comprises allocating a sensing radio resource block in the first time frame and having a second sub-frequency band adjacent to the first sub-frequency band.

The extended uplink radio resource block may be allocated for receiving an uplink communications signal from a User Equipment, UE. The sensing radio resource block may be allocated for communicating a sensing signal.

Advantageously, by allocating a sensing signal adjacent to the uplink signal, the communications signal received from the UE may be isolated by removing interference from the adjacent block. Removal of interference may be performed more effectively and efficiently where the interference signal from the adjacent block is a sensing signal (rather than a downlink communications signal), because the sensing signal could be the same and is known ahead of time.

The interference may be determined in a number of ways. In some examples, the interference may be measured in advance during a reserved (empty) resource block, with the sensing signal being communicated in an adjacent block. Advantageously, the interference may be measured without complex calculation.

In other examples, the interference may be determined based on prior knowledge of the sensing signal (which is typically predetermined and only changes infrequently, if at all). Prior knowledge of the sensing signal may be used to determine the interference via a cross correlation of the received signal with the predetermined sensing signal. This may require complex calculation, which may utilise processing and power resources. However, this may avoid the need for the above method, in which a reserved slot is allocated for determining interference. As a result, this method may use radio resources more efficiently.

In any case, the interference caused by the sensing signal in the adjacent block may be determined once and then this determined interference may be subtracted from each extended uplink radio resource block adjacent to the sensing signal. Advantageously, because the sensing signal does not change (or changes infrequently) the interference to be removed can be re-used and does not need to be re-determined each time. This method may therefore improve efficiency in terms of radio resource usage, computational resource usage and/or power usage.

The interference may be re-determined periodically, to correct for any drift in the interference caused by the sensing signal over time (e.g., transmission changes due to changes in temperature). Moreover, the interference may be redetermined if the sensing signal changes.

The process of determining and removing the interference caused by the base station's own transmissions (i.e., the sensing signals) may be referred to as "self interference alignment". The use of self interference alignment techniques for ISAC and SBFD integration may result in improved efficiency in utilisation of the radio resources, when both featured are implemented at the same BS.

In some examples, the proposed methods for interference removal may be highly effective and a smaller guard frequency band between DL (sensing) and UL resource blocks may be required, as compared to prior art methods in which the DL blocks adjacent to the UL blocks are used for data communications, rather than sensing.

According to some proposed methods, the implementation complexity may also be decreased (for example, by requiring a smaller antenna array size and/or reducing the components used in SBFD to cancel self-interference at the base station).

Furthermore, energy consumption may also be decreased at the base station in some examples. This may be at least because a smaller number of digital pre distortion (DPD) components can be used at the base station, in order to enable SBFD features. One technique used to cancel self-interference at the base station for prior art SBFD techniques is to use one or more DPDs for each RX chain at the base station, which consumes additional energy.

The method may further comprise allocating a second sensing radio resource block in the first time frame and having a third sub-frequency band adjacent to the first sub-frequency band.

In other words, the extended uplink radio resource block may be padded by sensing signals on both sides. Each extended uplink radio resource block may be adjacent to two resource blocks for sensing signals, which may be allocated in the same time frame with a first sensing radio resource block having a sub-frequency band that is directly above the extended uplink radio resource block and a second sensing radio resource block having a sub-frequency band that is directly below the extended uplink radio resource block (the second frequency sub-band is immediately above the first frequency sub-band and the third frequency sub-band is immediately below the first frequency sub-band).

The method may further comprise allocating a downlink radio resource block in the first time frame having a fourth sub-frequency band that is not adjacent to the first sub-frequency band.

In other words, the time frame may include one or more downlink communications radio resource blocks, for transmitting a downlink communications signal to a User Equipment, UE (which could be the same UE or a different UE). To avoid the problems with DL communications signals causing interference in the extended uplink radio resource block (which are more difficult to remove than the interference from the sensing signals), the downlink communications radio resource blocks are not allocated in sub-frequency bands that are adjacent to the extended uplink radio resource block.

In some examples, the first time frame is designated as a downlink time frame and includes many downlink communications radio resource blocks with only a relatively small number of extended uplink radio resource blocks (e.g., one) padded on either side by sensing radio resource blocks.

The sub-frequency bands may be contiguous.

Adjacent sub-frequency bands may be separated by a guard frequency band. By separating the frequency sub-bands with a guard frequency band, the amplitude of interference caused by signal leakage across the bands may be reduced.

A guard frequency band may be a reserved portion of the frequency spectrum between allocated frequency bands, in which no signals are communicated. The reserved guard frequency bands may be used to separate the frequency sub-bands to reduce signal power leakage across adjacent sub-bands.

The method may further comprise allocating a second extended uplink radio resource block in the first time frame having a fifth sub-frequency band that is not adjacent to the first sub-frequency band for transmitting an uplink communications signal to a User Equipment, UE (the same UE or a different UE). The sub-frequency bands adjacent to the fifth radio resource block may also be for communicating sensing signals.

In other words, where there is more than one extended uplink radio resource block, each extended uplink block may be padded on either side (on each adjacent frequency sub-band) with sensing signals.

Alternatively, the method may further comprise allocating a second extended uplink radio resource block in the first time frame having a fifth sub-frequency band that is adjacent to the first sub-frequency band for transmitting an uplink communications signal to a User Equipment, UE (same UE or different UE).

The method may further comprise allocating a second sensing radio resource block in the first time frame and having a third sub-frequency band adjacent to the fifth sub-frequency band.

In other words, where there is more than one extended uplink radio resource block, the extended uplink radio resource blocks may be provided together (i.e., all adjacent to each other) and the group of extended uplink radio resource blocks may be padded by sensing signals on both sides of the group (on the adjacent frequency sub-band directly above the group and directly below the group).

Of the two options (padding each UL block with sensing signals and grouping the UL blocks together and padding the group with sensing signals), it is preferred to pad each UL block with a sensing signal on both sides. One reason for this is that the interference on each UL block would be approximately the same every time, caused by two adjacent sensing signals: a sensing signal on the adjacent frequency sub-band above the UL block and a sensing signal on the adjacent frequency sub-band below the UL block. Therefore, the interference can be removed via a simple subtraction of the interference (which may be known from a signal-padded block in a previous time frame). In contrast, in a group of adjacent UL blocks, the top and bottom UL block of the group would be subject to interference from one directly adjacent sensing signal (either directly above or directly below) and an unknown interference from the sensing signal padding the other side of the group. UL blocks within the group would be subject to unknown levels of interference from both of the sensing signals padding the group. These unknown interferences may be more difficult to remove.

Nevertheless, grouping the UL blocks together and padding the group with sensing signals may be preferred in some examples. For example, where there are a large number of UL blocks in the time frame it may be impractical to individually pad each one with sensing signals, as this would use up a large proportion of the available radio resources in that time frame. Grouping the UL blocks together may improve efficiency of radio resource usage. Where the UL blocks are grouped together, interference from adjacent blocks may be assumed to be zero for UL blocks that are not on the edge of the group (and so are padded by other UL blocks). This is because the signal power of UL signals is low compared to DL/sensing signals. For UL blocks at the edge of the group (the uppermost and lowermost frequency sub-bands of the group of extended UL blocks), the interference caused by one adjacent sensing signal may be determined and this interference may be removed from the UL signal.

The method may further comprise allocating a reserved radio resource block in a second time frame. The method may further comprise transmitting a predetermined sensing signal during a radio resource block in the second time frame. The radio resource block of the sensing signal may have a sub-frequency band adjacent to a sub-frequency band of the reserved radio resource block. The method may further comprise receiving a signal during the reserved radio resource block. The received signal may comprise a component caused by interference of the sensing signal. The method may further comprise measuring the component of the received signal caused by interference of the sensing signal.

The second time frame may be earlier than the first time frame (temporally prior to the first time frame), so that the measured interference component is already available when removing the interference from the first radio resource block.

In other words, the method may comprise:
in an earlier time frame, communicating a sensing signal in a sub-frequency band adjacent to a reserved block (a block that is not allocated for communicating sensing signals, transmitting DL communication signals or receiving UL communication signals); and
measuring the received interference form the adjacent sensing signal during the reserved block.

Alternatively, the second time frame may be later than the first time frame (temporally subsequent to the first time frame). The received signal during the first radio resource block may be stored and the interference may be removed from the first radio resource block after the received interference during the second time frame has been measured.

This may be useful if the extended UL communications signal during the first radio resource block has already been received/scheduled at the time the base station identifies that the channel condition has changed. The updated interference measurement may be obtained, and the signal may nevertheless be recovered.

Measuring the component of the received signal caused by interference of the sensing signal may comprise using prior knowledge of the transmitted sensing signal to isolate the component of the received signal caused by interference of the sensing signal.

Alternatively, interference from other sources may be assumed to be zero and measuring the component of the received signal caused by interference of the sensing signal may comprise measuring the received signal.

There may be one frequency sub-band designated for use during extended UL transmission or a plurality of sub-bands.

The interference may be measured on any one of the available frequency sub-bands (component carriers). The measured interference value may be assumed to be approximately the same on each sub-band (i.e., it may be unnecessary to perform a separate interference measurement on each sub-band). In other words, the interference may be measured at any frequency sub-band that may be used as a sub-band for the extended UL transmission.

Where there is only one frequency sub-band designated for use during extended UL transmission, the interference may optionally be measured during a reserved block on the same sub-band.

In any case, the reserved block on which the interference is measured is adjacent in frequency to a sensing block. In this way, the interference caused by the adjacent sensing signal during the extended UL block may be approximated by measuring the adjacent sensing signal during the reserved block.

The method may further comprise transmitting a second predetermined sensing signal during a radio resource block in the second time frame. The second sensing signal may have a sub-frequency band adjacent to the sub-frequency band of the reserved radio resource block (i.e., one sensing signal on the sub-frequency immediately above the reserved block and one sensing signal on the sub-frequency immediately below the reserved block). The signal received during the reserved radio resource block may further comprise a second component caused by interference of the second sensing signal.

The two sensing signals in blocks adjacent to the reserved block may be the same as each other or may be different.

The method may further comprise measuring the second component of the received signal caused by interference of the second sensing signal.

In other words, the reserved block may be padded on each side by a sensing block, so that the block on the sub-band immediately above and the sub-band immediately below the reserved block are each allocated for communicating a sensing signal (during the second time frame). As a result, the interference from both sensing signals into the reserved block will be measured.

In some examples, the components of interference from each sensing signal may be isolated from the received signal and measured separately (e.g., based on prior knowledge of the predetermined sensing signals, where the sensing signals are different).

In some examples, the reserved block may be adjacent to a sensing signal on one side and another reserved block on the other side. In this way, the interference from one individual sensing signal may be measured. This may be performed in separate reserved blocks for different sensing signals.

By measuring interference from individual sensing signals separately (via either of the two above methods), interference may be removed from extended UL blocks more flexibly. For example, if the extended UL block is padded by two sensing signals (e.g., different sensing signals selected from a plurality of available sensing signals), the previously measured interference components of those two sensing signals may be individually removed from the received signal. To achieve this, the interference caused by each sensing signal may be measured in advance, but it may not be necessary to measure the interference caused by every combination of two sensing signals from the plurality.

If the extended UL block is padded by one sensing signal and one reserved block, the previously measured interference components of the one sensing signal may be removed from the received signal. In this way, it is not necessary to simultaneously transmit the sensing signal in both blocks adjacent to the extended UL block. For example, sometimes no signal is transmitted in one adjacent block of the extended UL block. This may reduce power consumption.

The method may comprise measuring the received signal caused by interference of the sensing signal and the second sensing signal. In other words, rather than measuring the individual components caused by each adjacent sensing signal, the overall interference caused by both sensing signals may be measured.

Where the interference from both adjacent blocks is measured together, the extended UL block may be padded by the same two sensing signals as the reserved block (whether the two sensing signals padding the reserved block are the same or different), so that the interference measured during the reserved block may be assumed to be the same during the extended UL block.

The interference during the reserved block may be measured at a frequency that will be used for extended uplink communications. In some examples, there may be only one sub-band that is used for extended uplink communications, and this may be the sub-band on which the interference is measured. In other examples, there may be a plurality of sub-bands that are available for extended sub-band UL communication (and the interference may be measured on one of the plurality of sub-bands).

The method may further comprise receiving a communications signal during the extended uplink radio resource block. The received communications signal may comprise a first component received from a User Equipment, UE, and a second component caused by interference of the sensing signal communicated during the sensing radio resource block. The method may further comprise removing the second component from the received communications signal by subtracting the interference measured during the reserved block.

In other words, the value of interference measured during the reserved block may be subtracted from the signal received from a UE during an extended UL block. This may be an efficient way to remove interference from the extended UL block.

In some prior methods, the blocks adjacent to the extended UL block may be standard DL blocks. In these alternative methods, interference from DL signals in the adjacent DL blocks may be removed from the received UL signal. However, the process of removing these interfering signals may be computationally expensive and so less efficient than the proposed methods. In the proposed methods, the interference may be measured in a different time frame, rather than calculated based on prior knowledge of the signals transmitted in adjacent blocks.

The method may further comprise, during one or more subsequent time frames:
allocating an extended uplink radio resource block and allocating a sensing radio resource block in the subsequent time frame in a sub-frequency band adjacent to a sub-frequency band of the extended uplink radio resource block (in accordance with claim 1); and
receiving a communications signal during the extended uplink radio resource block and removing an interference component from the received communications signal by subtracting the interference measured during the reserved block (as described above).

In other words, the value of interference measured once may be used for a plurality of subsequent extended uplink blocks.

The method may further comprise measuring the interference again and updating the value used to remove the interference from the received extended UL signal.

The interference may be measured periodically (e.g., every X frames) or whenever a condition is met (e.g., a measure of channel condition changes or an error is detected in the uplink signal, or the error rate exceeds a threshold).

In some examples, if a measure of channel condition indicates that the recovered signal will be corrupted to an extent that data transmission by BPSK is error prone or impossible, the base station may measure the interference again.

This may be used to account for changes in channel conditions (e.g., due to changes in temperature).

A channel condition may be measured via one or more of a measurement of signal to noise ratio, signal to interference plus noise ratio, reference signal received power, reference signal received quality, block error rate, channel quality indicator, physical downlink control channel error rate, received signal strength indicator, modulation error rate, and/or error vector magnitude.

The system may be operating a sub-band non-overlapping Full Duplex, SBFD, scheme.

The SBFD scheme may be operated within a Time Division Duplex, TDD, carrier.

The first time frame (and the second time frame and each subsequent time frame) may be a downlink time frame of the TDD carrier.

The SBFD scheme may be operated within a single configured downlink, DL, and uplink, UL, bandwidth part, BWP, pair.

The DL and UL BWP pair may each have the same centre frequency.

A base station configured to perform any of the methods described above is also provided.

Computer software comprising instructions that, when executed by a processor, cause the processor to perform any of the methods described above is also provided.

### Brief description of the drawings

Fig. 1 shows an example telecommunications system.
Fig. 2 shows example radio resource allocation in TDD and SBFD operation.
Fig. 3 shows an example radio resource allocation multiplexing chart.
Fig. 4 illustrates interference between adjacent frequency sub-bands, due to internal signal leakage at the base station.
Fig. 5 illustrates signal leakage between TX & RX chains at the BS.
Fig. 6 shows allocation of radio resource blocks split into sub-bands, in order to implement ISAC and SBFD.
Fig. 7 illustrates suppression of interference caused by internal leakage between TX & RX chains at the BS.

### Detailed description

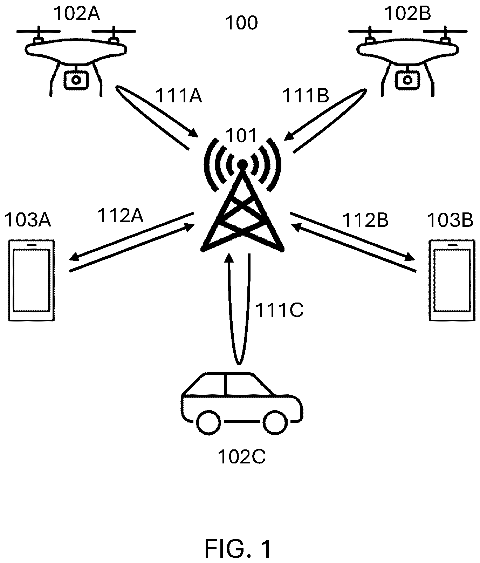

Fig. 1 shows an example telecommunications system 100 comprising a base station 101, one or more sensing targets 102A, 102B, 102C, and one or more communications targets or User Equipments (UEs) 103A, 103B. The system further comprises sensing channels 111A, 111B, 111C and communications channels 112A and 112B.

Although channels are depicted as being between the base station 101 and a sensing or communications target, sensing and communications signals communicated along such channels may be received by any of the targets. For example, sensing signals communicated along channels 111A, 111B, and 111C may be received by UEs 103A or 103B. As such, if a sensing signal is sent along a sensing channel simultaneously with a communications signal along a communication channel, for example channel 112A, the receiving UE, for example UE 103A, may not be able to decode the communications signal due to interference from the sensing signal.

Time-domain multiplexing and/or frequency-domain multiplexing may be employed. For example, time axis may be divided into a sequence of time slots and/or the frequency axis may be divided into a sequence of frequency slots.

A transmitter may communicate signals in different directions via beamforming. Each beam may carry a different signal so that each beam is a separate radio resource allocation. Therefore, in some examples, each unique combination of timeslot, frequency and beam constitutes a different radio resource allocation, where all techniques are used (frequency multiplexing, time domain multiplexing, and beamforming). In other examples, one or two of these techniques may be used.

As described above, SBFD enables simultaneous transmit and receive operations at the base station, using non-overlapping frequency resources ("sub-bands"). Use of SBFD extends the duration over which UL TX can occur, in order to improve UL coverage/capacity and latency performance.

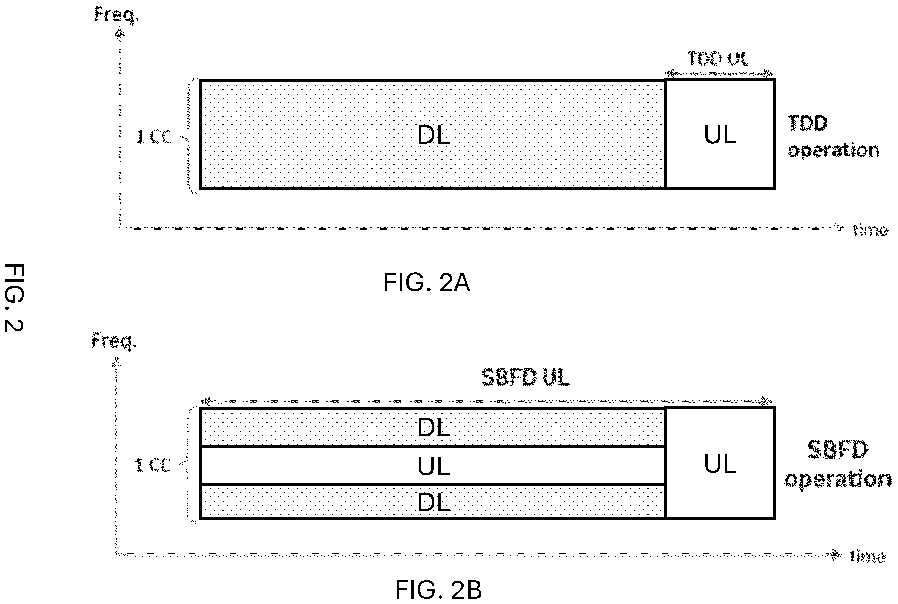

Fig. 2 illustrates how UL and DL radio resources are allocated in TDD time frames, compared to how radio resources may be allocated during SBFD operation. In Fig. 2A, standard TDD operation is illustrated, in which the radio resources are divided into DL and UL time frames. As can be seen in the SBFD operation of Fig. 2B, the DL time frame is divided into blocks by separating the frequency band (illustrated as 1 component carrier, CC) into sub-bands. One or more of the blocks may be allocated for UL, thus increasing the UL capacity.

A component carrier refers to an individual carrier frequency that can be combined with other carriers to create a wider bandwidth for data transmission. Whilst Fig. 2 illustrates that a component carrier may be divided into sub-bands, each of these sub-bands then forms an independent channel and so each sub-band may also be referred to as a component carrier.

ISAC and SBFD may both be enabled together (e.g., in 6G). Both can be integrated at the same BS.

It is an aim for mobile network operators to support ISAC and SBFD features while ensuring efficient use of spectrum resources, so that the new functionality may be added while fulfilling the requirements of existing customers. Therefore, adding ISAC sensing capabilities to base stations should not be disadvantageous for existing communication customers. To achieve this, efficient utilization of the available frequency spectrum is needed, so as not to waste limited frequency resources, and without creating interference to the communication signals detrimental to the quality of service of communications services. It is a further goal of mobile network operators that the new sensing functionality is accurate and that a targeted object can be precisely detected.

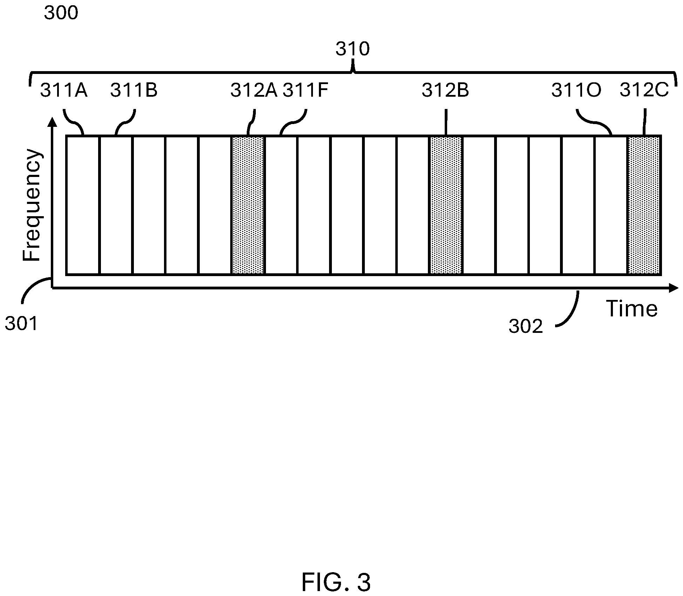

Fig. 3 shows an example radio resource allocation multiplexing chart 300 for sensing and communication. The multiplexing chart has a frequency axis 301 and a time axis 302. The time axis 302 is divided into time frames, each of which is further divided into a sequence of time slots 310.

For simplicity, only time-domain multiplexing is shown in Fig. 3. However, frequency-domain multiplexing may also be employed, as described above. In this case, the frequency axis 301 may be divided into a sequence of frequency bands, each of which is further divided into sub-bands. Where both frequency and time domain multiplexing are employed, a radio resource allocation may be defined by its position on the time and frequency axes.

Each time frame may have one or more blocks allocated for sensing. With continued reference to Fig. 3, unshaded time slots, for example time slots 311A, 311B, 311F, and 311O, are communications time slots. Partly shaded time slots, for example time slots 312A, 312B and 312C are sensing time slots.

It will be appreciated by the person skilled in the art that the invention is not limited to the specific arrangement of communications and sensing resource blocks depicted, but could be worked with any suitable temporal or frequency-space arrangement of radio resource allocations.

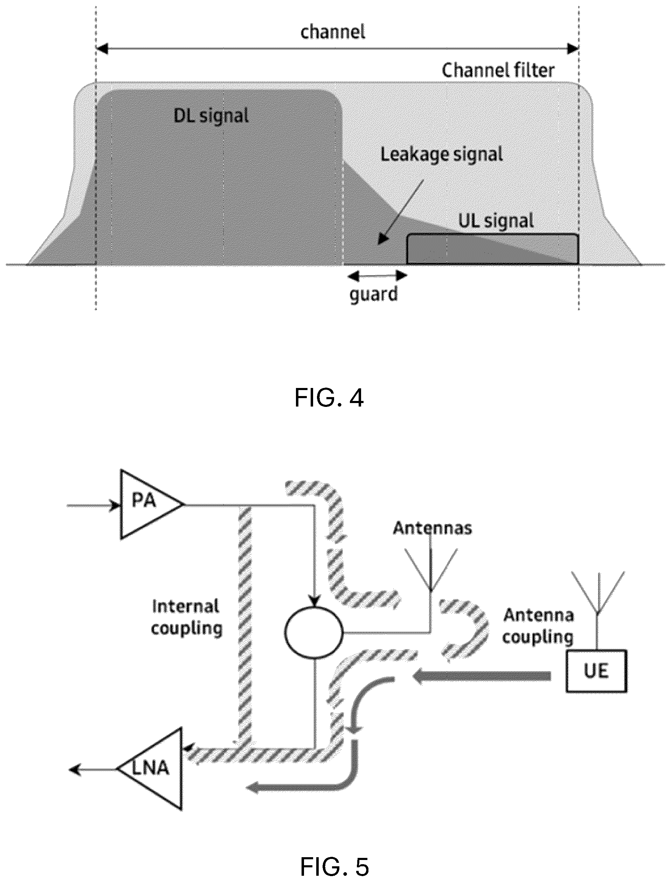

Self-interference at a base station operating a SBFD scheme may be caused due to simultaneously transmitting and receiving signals. A DL signal may be transmitted during a resource allocation of the downlink TDD frame, while the extended UL signal (part of the SBFD scheme) may be received during a resource allocation of the same downlink TDD frame. Although both signals are not using the same radio frequency (because a single radio resource would not be allocated for both uplink and downlink), interference may still occur between adjacent frequencies, due to internal signal leakage at the base station, as shown in Fig. 4.

As illustrated in Fig. 4, a UL signal is received during an extended UL radio resource allocation, which occurs during the same DL time frame as a DL radio resource allocation in an adjacent frequency sub-band. Internal signal leakage occurs from the DL radio resource allocation to the adjacent extended UL radio resource allocation. The internally leaked DL signal at the base station has very high power level compared to the received UL signal from the UE.

Fig. 5 illustrates TX & RX chains at the BS. As can be seen from Fig. 5, leakage from the DL signals transmitted by the base station create interference in the UL signals received at the base station from a UE. The leakage may be caused via a combination of internal coupling and antenna coupling.

Several techniques have been proposed to mitigate the internal interference at the BS. Nevertheless, it is challenging to decode the received UL signal while transmitting on DL at the BS. The majority of existing solutions impact the efficiency of using the available spectrum (e.g., lower MCS, increased guard between UL and DL to mitigate the leakage signal) and/or increase the complexity of implementation (e.g., separate TX antennas from RX antennas at the BS, which increases the antenna panel size).

Integrating SBFD with ISAC provides advantageous features from each scheme to the same BS. This may increase the flexibility available spectrum use but also increases the complexity. The proposed methods aim to integrate the sensing functionality associated with ISAC and the extended UL coverage and lower latency from SBFD, while also solving some of the problems described above. The proposed methods also aim to integrate these features together, without impacting the performance of each other and using the available radio spectrum efficiently.

The proposed methods therefore propose "Self interference alignment" techniques for ISAC & SBFD integration. These methods may utilise the radio resources efficiently when both features are implemented at the same BS.

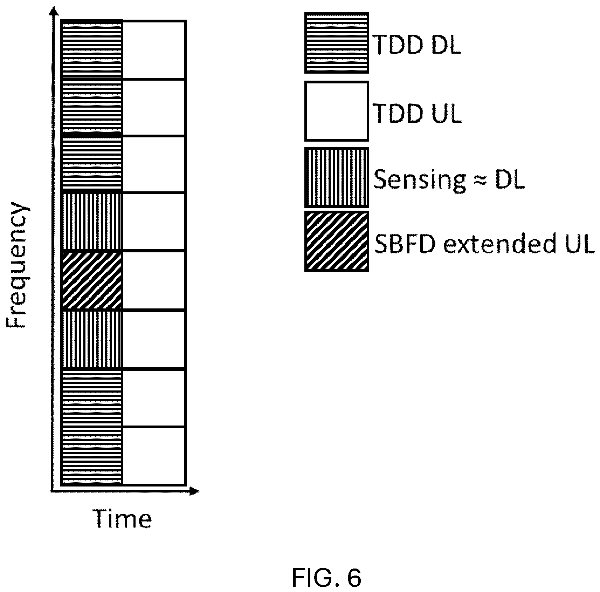

Fig. 6 illustrates a specific example in which sub-bands in a DL TDD time frame may be allocated between DL communications, sensing, and extended UL. Fig. 6 illustrates how sub-bands may be allocated in accordance with the proposed methods in order to implement ISAC and SBFD, while addressing the issue of signal leakage.

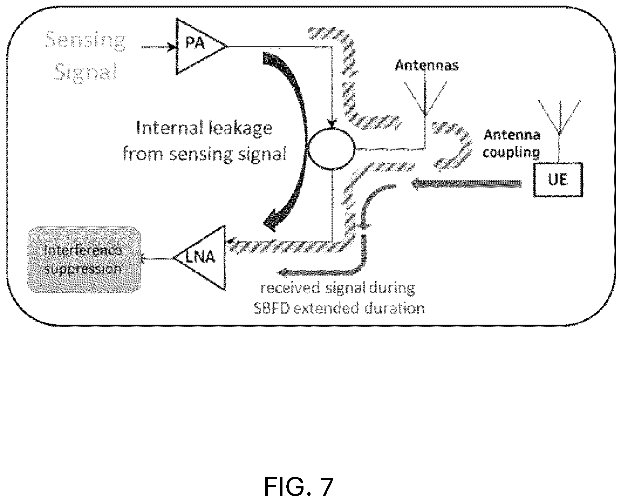

Fig. 7 illustrates TX & RX chains at the BS, showing the "internal leakage" from the sensing signal to the received UL signal form the UE (received during SBFD extended duration). Since the sensing signal is predetermined, the interference from the sensing signal may be measured ahead of time and then removed from the received signal during the "interference suppression stage".

In a specific example, the following steps may be performed for self-interference alignment for ISAC & SBFD integration:

The BS transmits a sensing signal during the same time frame as receiving the extended UL SBFD transmission from a UE.

The sub-band allocated for SBFD extended uplink is adjacent to the sub-band allocated for sensing.

The received signal at the RX chain will be the SBFD UL signal + the leakage from the sensing signal.

The sensing signals are constant signals. In other words, the sensing signal transmitted by the base station is the same each time. This will lead to almost a constant leakage value.

At the interference suppression stage (as shown in figure 7), the sensing leakage signal will be subtracted from the received signal.

The interference value from the sensing leakage signal can precalculated separately when there is no SBFD received signal.

This value will be stored. Then it will be used during the interference suppression stage.

By applying self-interference alignment for ISAC and SBFD integration, internal interference caused by the ISAC sensing signal may be suppressed, while enabling a SBFD extended UL transmission period. Therefore, the BS can provide the sensing functionality, while extending UL coverage and reducing latency.

By providing methods for removing interference from the received UL signals during the extended UL radio resource allocation, lower guard bands between DL and UL signals may be needed. The implementation complexity may also be decreased (e.g., a smaller antenna array size is required, components used in SBFD to cancel self-interference at the BS may be reduced).

A common technique used to cancel self-interference at the BS for prior art SBFD is to use one or more DPDs for each RX chain at the BS, which consumes additional energy. Therefore, energy consumption may also be decreased at the BS via the proposed methods, since a smaller number of digital pre distortion (DPD) components can be used at the BS to enable SBFD features.

A number of combinations of the various described embodiments could be envisaged by the skilled person. For example, whilst the disclosure is described in relation to existing network architecture, it will be understood that changes to the architecture (and/or nomenclature) are possible, but the present disclosure may still be applicable in this case. All of the features disclosed herein may be combined in any combination, even if that combination has not been explicitly detailed, except combinations where at least some of such features and/or steps are mutually exclusive. In particular, the preferred features of the invention are applicable to all aspects of the invention and may be used in any combination. Likewise, features described in non-essential combinations may be used separately (not in combination).

A base station (BS) generally refers to a fixed station that performs communication with a UE and/or another BS, and exchanges various kinds of data and control information with the UE and another BS. The BS may be referred to as an advanced base station (ABS), a base transceiver station (BTS), a radio base station, a radio transceiver, a transceiver function, a basic service set (BSS), an extended service set (ESS), an access point (AP), a Node B (NB), an eNode B (eNB), a gNode B (gNB), a transmission and reception point (TRP), a processing server (PS), or some other suitable terminology, depending on the protocol, standard, context or technology. In some examples, a base station may include two or more transceivers that may or may not be collocated. Each transceiver may communicate on the same or different carrier frequency within the same or different frequency band.

Where this application refers to a server or network entity, for instance, this may actually be a pair of servers, or network entities (primary and failover), for redundancy.

Examples of mobile devices include various devices that transmit and receive user data and/or various kinds of control information to and from a base station. The mobile device may be referred to as a user equipment (UE), terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above methods are described in relation to a specific network in some examples, (such as a 6G or 5G/NR network), these methods, techniques, apparatuses, and systems may be applied to a variety of wireless multiple access systems. Examples of the multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems.

A cellular communications system comprises a plurality of cells. A cell refers to a geographical area to which one or more nodes provide a communication service. Accordingly, communicating with a specific cell may mean communicating with an gNB or a node which provides a communication service to the specific cell. Furthermore, channel status/quality of a specific cell refers to channel status/quality of a channel or communication link formed between an gNB or node which provides a communication service to the specific cell and a UE. The UE may measure DL channel state received from a specific node using cell-specific reference signal(s) (CRS(s)) transmitted on a CRS resource and/or channel state information reference signal(s) (CSI-RS(s)) transmitted on a CSI-RS resource, allocated by antenna port(s) of the specific node to the specific node. Meanwhile, a 3GPP system uses the concept of a cell in order to manage radio resources and a cell associated with the radio resources is distinguished from a cell of a geographic region.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program." A storage medium and a transmission medium carrying the computer software are also provided. The computer software may comprise one or more instructions, or code, that, when executed by a computer, causes the methods described to be performed. Computer software may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

The computer program may be configured to control a network entity and/or mobile device to perform any method according to the disclosure. A network entity of a telecommunications network (e.g., a cellular network) may also be provided, configured to operate in accordance with certain methods disclosed herein. For example, the network entity may include a processor and at least one communication interface, particularly comprising one or both of a transmitter and receiver. A mobile device (e.g., UE) may also be provided, configured to operate in accordance with certain methods disclosed herein. The mobile device may likewise include a processor and at least one communication interface, particularly comprising one or both of a transmitter and receiver.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

The terminology used herein is for the purpose of describing particular embodiments only and is not intended to be limiting of the invention. As used herein, including in the claims, unless the context indicates otherwise, of the terms herein are to be construed as including the plural form and vice versa. For instance, the singular forms 'a', 'an', and 'the' are intended to include the plural forms as well, unless the context clearly indicates otherwise. Therefore, "a base station" and "a user equipment" may be interpreted as "one or more base stations" and "one or more user equipments". It will be further understood that the terms 'comprises', 'comprising', 'includes', and/or 'including' when used herein, specify the presence of stated features, integers, steps, operations, elements, and/or components, but do not preclude the presence or addition of one or more other features, integers, steps, operations, elements, components, and/or groups thereof.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

Like numbers refer to like elements throughout. Thus, the same or similar numbers may be described with reference to other drawings even if they are neither mentioned nor described in the corresponding drawing. Also, elements that are not denoted by reference numbers may be described with reference to other drawings.

A method of manufacturing and/or operating any of the devices disclosed herein is also provided. The method may comprise steps of providing each of the features disclosed and/or configuring or using the respective feature for its stated function. In the drawings and specification, there have been disclosed typical embodiments of the invention and, although specific terms are employed, they are used in a generic and descriptive sense only and not for purposes of limitation, the scope of the invention being set forth in the following claims.

## Claims

1. A method of communicating sensing and communication signals in an Integrated Sensing and Communication, ISAC, system, wherein an available frequency band is divided into a plurality of sub-frequency bands, wherein the sensing and communication signals are communicated during a plurality of time frames, wherein the plurality of time frames and the plurality of sub-frequency bands together provide a plurality of radio resource blocks, each radio resource block having a sub-frequency band and time frame, wherein the method comprises:
allocating an extended uplink radio resource block in a first time frame and having a first sub-frequency band; and
allocating a sensing radio resource block in the first time frame and having a second sub-frequency band adjacent to the first sub-frequency band.

2. The method of claim 1, further comprising:
allocating a second sensing radio resource block in the first time frame and having a third sub-frequency band adjacent to the first sub-frequency band.

3. The method of claim 1 or claim 2, further comprising:
allocating a downlink radio resource block in the first time frame having a fourth sub-frequency band that is not adjacent to the first sub-frequency band.

4. The method of any preceding claim, wherein the sub-frequency bands are contiguous.

5. The method of any of any preceding claim, wherein adjacent sub-frequency bands are separated by a guard frequency band.

6. The method of any preceding claim, further comprising:
allocating a reserved radio resource block in a second time frame;
transmitting a predetermined sensing signal during a radio resource block in the second time frame, wherein the radio resource block of the sensing signal has a sub-frequency band adjacent to a sub-frequency band of the reserved radio resource block;
receiving a signal during the reserved radio resource block, wherein the received signal comprises a component caused by interference of the sensing signal; and
measuring the component of the received signal caused by interference of the sensing signal.

7. The method of claim 6, further comprising:
receiving a communications signal during the extended uplink radio resource block, wherein the received communications signal comprises a first component received from a User Equipment, UE, and a second component caused by interference of the sensing signal communicated during the sensing radio resource block; and
removing the second component from the received communications signal by subtracting the interference measured during the reserved block.

8. The method of claim 7, further comprising:
during one or more subsequent time frames:
allocating an extended uplink radio resource block and allocating a sensing radio resource block in the subsequent time frame in a sub-frequency band adjacent to a sub-frequency band of the extended uplink radio resource block;
receiving a communications signal during the extended uplink radio resource block and removing an interference component from the received communications signal by subtracting the interference measured during the reserved block.

9. The method of any preceding claim, wherein the system is operating a sub-band non-overlapping Full Duplex, SBFD, scheme.

10. The method of claim 9, wherein the SBFD scheme is operated within a Time Division Duplex, TDD, carrier.

11. The method of claim 10, wherein the first time frame is a downlink time frame of the TDD carrier.

12. The method of any of claims 9 to 11, wherein the SBFD scheme is operated within a single configured downlink, DL, and uplink, UL, bandwidth part, BWP, pair.

13. The method of claim 12, wherein the DL and UL BWP pair each have the same centre frequency.

14. A base station configured to perform the method of any preceding claim.

15. Computer software comprising instructions that, when executed by a processor, cause the processor to perform the method of any of claims 1 to 13.
